# EUROPÄISCHE PATENTSCHRIFT

(11) **EP 1 508 649 B1**
(45) Veröffentlichungstag und Bekanntmachung des Hinweises auf die Patenterteilung: **29.11.2006**
(21) Anmeldenummer: 04016894.0
(22) Anmeldetag: 17.07.2004
(51) Int. Cl.: E04B 1/78, B26B 29/06, D04H 13/00

(54) **Dämmelement und Verfahren zu dessen Herstellung**
Fiber-insulating plate and process for producing it
Panneau fibreux isolant et procédé de fabrication

(30) Priorität: 19.08.2003 DE 10338001
(43) Veröffentlichungstag der Anmeldung: 23.02.2005
(73) Patentinhaber: HERAKLITH AG, 9702 Ferndorf (AT)
(72) Erfinder: Lerchbaumer, Dieter, Dr., 9800 Spittal/Drau (AT)
(74) Vertreter: Becker, Thomas

(56) Entgegenhaltungen:
- EP-A- 0 931 886
- EP-A- 1 426 474
- WO-A-03/042468
- CH-A- 620 861
- CH-A- 692 114
- DE-A- 19 734 532
- US-B1- 6 248 420

## Beschreibung

Dämmelemente aus Mineralfasern sind seit langem bekannt. Dabei werden die aus einer Schmelze gewonnenen Mineralfasern mit einem Bindemittel versehen und in einer Sammelkammer zu einem sogenannten Primärvlies gesammelt.

Dieses Primärvlies kann unmittelbar in der gewünschten Materialstärke bereitgestellt werden; es ist aber auch möglich, es über ein sogenanntes "Pendel" (DE 41 27 172 C2) zu einem sogenannten Sekundärvlies aufzubereiten, welches im Prinzip aus einem mäanderförmig gefalteten Primärvlies besteht.

Das Vlies wird anschließend - je nach Bedarf - verdichtet und thermisch behandelt, um das Bindemittel auszuhärten.

Technisch betrachtet weist ein solches Dämmelement über den Querschnitt (das Volumen) betrachtet weitestgehend homogene Eigenschaften auf, insbesondere eine weitestgehend konstante Rohdichte (Raumdichte).

Es sind zahlreiche Vorschläge gemacht worden, die Dichte beziehungsweise die Festigkeitseigenschaften derartiger Dämmelemente zu verändern. Hierzu gehört die bereits erwähnte Komprimierung zur Erhöhung der Rohdichte des Gesamtprodukts.

Gemäß DE 37 01 592 C2 wird das Vlies entlang seines Transportweges horizontal aufgetrennt. Eine "Schicht" wird anschließend komprimiert, während die andere Schicht unverändert bleibt. Beide Schichten werden danach wieder zusammengeführt und in einem Ofen gemeinsam thermisch behandelt. Danach liegt ein zweischichtiges Dämmelement vor, dessen Schichten (senkrecht zu den Haupt-Oberflächen betrachtet) eine unterschiedliche Dichte aufweisen.

Das Verfahren ist aufwendig. Es erfordert auch eine Mindest-Schichtstärke, um die Schicht überhaupt abtrennen zu können. Ähnliche Vorschläge enthalten die US-A-6248420 und EP-A-0931886. Schichten unterschiedlicher Dichte werden dabei miteinander verbunden. Dies gilt auch für die DE-A-19734532.

Daneben sind Vorschläge gemacht worden, insbesondere die Oberflächenfestigkeit von Mineralfaser-Dämmelementen durch Auflage von Gittern, Vliesen aus Fremdwerkstoffen, Beschichtungen oder dergleichen zu verstärken.

Bei allen diesen Maßnahmen ist nachteilig, dass das Dämmelement aus unterschiedlichen Materialien (Werkstoffen) besteht, beispielsweise dem Grundkörper aus Mineralfasern und einer Beschichtung aus einem Glas oder einem Putz.

Weitere Vorschläge zielen darauf ab, Mineralfaser-Elemente unterschiedlicher Dichte getrennt herzustellen und anschließend zu einem Verbundkörper zu verbinden. Auf diese Weise lassen sich zwar Dämmelemente herstellen, die lediglich aus einer Komponente (Mineralfasern) bestehen. Ein gewisser Nachteil ist aber, dass die entsprechenden Schichten jeweils wieder eine Mindeststärke aufweisen müssen und zusätzliche Verfahrensschritte erforderlich sind.

Obwohl seit Jahrzehnten Versuche unternommen werden, Mineralfaser-Dämmelemente herzustellen, die insbesondere in ihrem Oberflächenbereich eine erhöhte Festigkeit aufweisen (und zwar sowohl Druckfestigkeit als auch Zug- oder Reißfestigkeit) fehlt es bisher an konstruktiven Vorschlägen, die eine großtechnische Anwendung erlauben und die Herstellung von Dämmelementen einschließen, die nur relativ dünne verdichtete Zonen aufweisen.

Zur Lösung dieser Aufgabe geht die Erfindung von folgender grundsätzlicher Überlegung aus: Jedes Mineralfaserprodukt besteht aus einem mehr oder weniger groben Gerüst aus Mineralfasern, die untereinander über das Bindemittel verbunden sind beziehungsweise durch gegenseitiges Verhaken sich gegenseitig stabilisieren. Mit anderen Worten: Zwischen den einzelnen Fasern oder Faserbündeln gibt es mehr oder weniger große Freiräume (Poren). Die Erfindung nutzt diese Erkenntnis dahingehend, die Freiräume (Zwickel) zwischen den Mineralfasern im Oberflächenbereich eines Dämmelementes mit zusätzlichen Fasern auszufüllen.

Insbesondere die sich unmittelbar von der Oberfläche des Dämmelementes erstreckenden Poren (Vertiefungen) lassen sich leicht von außen mit Fasern verfüllen ("ausstopfen"), sodass in dem entsprechenden Oberflächenabschnitt des Dämmelementes und unmittelbar darunter eine deutlich erhöhte Faserkonzentration (Faserdichte) ausgebildet wird und damit eine deutlich erhöhte Rohdichte (Raumdichte) des Produktes. Ohne Weiteres ist bereits aus diesen Erläuterungen ersichtlich, dass der Grad der zusätzlichen Oberflächenverdichtung beliebig eingestellt werden kann, je nachdem, wie viele Fasern eingebracht werden und welchen Durchmesser beziehungsweise welche Länge die entsprechenden Fasern aufweisen.

Die Fasern können beispielsweise Recyclingfasern aus der Produktion sein, die auf eine oder beide Hauptoberflächen der Dämmstoffbahn bei der Herstellung aufgestreut oder aufgeblasen werden. Ebenso können aber auch produkteigene Fasern genutzt werden. So kann während des Herstellungsprozesses mindestens eine Oberfläche der (vorzugsweise noch nicht ausgehärteten) Dämmstoffbahn abgefräst oder abgeschnitten beziehungsweise abgemäht werden, sodass die dabei anfallenden geschnittenen Fasern anschließend unmittelbar in die entsprechenden Lücken auf der korrespondierenden Produktoberfläche eindringen und diese verdichten können.

In ihrer allgemeinsten Ausführungsform betrifft die Erfindung ein Mineralfaser-Dämmelement mit den Merkmalen des Anspruchs 1:

Insbesondere dann, wenn die Oberflächenverdichtung durch Fasern erfolgt, die zuvor vom Produkt selbst abgetrennt wurden, weist der entsprechende Oberflächenabschnitt einen höheren Anteil an kürzeren Fasern auf als im Kern des Dämmelementes vorhanden sind. Die Verwendung kürzerer Fasern ist auch in Bezug auf eine möglichst hohe Verdichtung von Vorteil. "Kürzere" Fasern bedeutet dabei, dass die Faserlänge unterhalb des Mittelwertes der Faserlänge des Gesamtproduktes (vor der Oberflächenverdichtung) liegen soll.

Eine erhöhte Dichte lässt sich aber auch mit längeren Fasern erreichen. Es kommt lediglich darauf an, die offenen Bereiche zwischen den Fasern im Oberflächenbereich auszufüllen.

Mit den beschriebenen Maßnahmen lässt sich die Rohdichte im entsprechenden Oberflächenbereich des Dämmelementes praktisch beliebig erhöhen, beispielsweise um mindestens 10, mindestens 20 oder mindestens 40 % gegenüber der Rohdichte im Kern des Dämmelementes.

Der Verdichtungsgrad kann aber auch auf mindestens 50 oder mindestens 70 % erhöht werden, insbesondere, wenn viele kurze Fasern in den Oberflächenbereich eingebracht werden und dieser Bereich anschließend noch einmal mechanisch nachverdichtet wird. Dazu kann die Dämmstoffbahn beispielsweise (erneut) zwischen korrespondierenden Walzen hindurchgeführt werden. Dabei werden dann auch lose auf der Oberfläche aufliegende Zusatzfasern in den Oberflächenabschnitt des Dämmelementes gedrückt. In diesem Fall kann die Rohdichte in dem Bereich mit höherer Dichte an Mineralfasern auch mehr als 80 % oder mehr als 100 % über der Rohdichte im Kern des Dämmelementes liegen.

Auch wenn sich die beschriebene Gestaltung im Prinzip an jedem Mineralfaser-Dämmelement realisieren lässt so werden die beschriebenen Vorteile besonders deutlich an Dämmelementen mit einem überwiegenden Faserverlauf senkrecht zu der oder den Hauptoberflächen. Dazu stehen im Stand der Technik verschiedene Maßnahmen zur Verfügung. Beispielsweise durch eine sogenannte "Längskomprimierung" (DE 38 32 773 C2) kann die ursprüngliche Hauptorientierung der Fasern in Transportrichtung und parallel zu den Hauptoberflächen der Dämm-stoffbahn in eine weitestgehend senkrecht zu den Hauptoberflächen verlaufende Orientierung geändert werden.

Ein Dämmelement mit einer Orientierung der Fasern überwiegend senkrecht zu den Hauptoberflächen lässt sich aber auch durch einen Lamellenaufbau erreichen, wie er aus der DE 100 13 644 A1 bekannt ist.

Absolut betrachtet ist die Erfindung insbesondere für Dämmelemente mit einer Rohdichte (im Kern) zwischen 100 und 500 kg/m³ geeignet. Sie lässt sich aber ebenso für Dämmelemente mit geringerer oder höherer Rohdichte umsetzen.

Der Oberflächenbereich mit erhöhter Dichte kann eine beliebige Stärke (Dicke) aufweisen, je nach Verfahrensführung. Üblicherweise wird es genügen, wenn der Bereich mit höherer Dichte an Mineralfasern etwa 3-10 % der Gesamtstärke des Dämmelementes ausmacht, senkrecht zu der entsprechenden Haupt-Oberfläche betrachtet. Dieser Bereich kann aber auch bis zu 20 % oder mehr betragen.

Absolut ausgedrückt genügt es prinzipiell, den verdichteten Oberflächenbereich 1-5 mm, gegebenenfalls auch bis 10 oder 20 mm stark auszuführen. Der höhere Faseranteil führt unmittelbar zu einem erhöhten Bindemittelanteil und damit - nach dem Aushärten des Bindemittels - zu einer weiteren Kompaktierung, also Erhöhung der Rohdichte und Festigkeit in dieser Zone und bezüglich des Gesamtproduktes. Gleichwohl handelt es sich bei dem erfindungsgemäßen Dämmelement um ein Bauprodukt, welches ausschließlich aus Mineralfasern besteht, welche durch ein Bindemittel gebunden sind. Insoweit ergeben sich keinerlei Entsorgungsprobleme durch unterschiedliche Werkstoffe, wie im Stand der Technik.

Das Verfahren zur Herstellung eines solchen Dämmelementes zeichnet sich in seiner allgemeinsten Ausführungsform durch folgende Merkmale aus:
- auf und/oder in mindestens einer Hauptoberfläche eines Vlieses (Primärvlies beziehungsweise Sekundärvlies) aus Mineralfasern, die zumindest teilweise mit einem Bindemittel benetzt sind, werden weitere Fasern aufgebracht,
- das so behandelte Dämmelement durchläuft anschließend einen Ofen zur Aushärtung des Bindemittels.

Die in den Oberflächenbereich eingebrachten Zusatzfasern können Fasern sein, die zuvor von dem entsprechenden Dämmelement abgetrennt wurden, insbesondere durch Fräsen, Schneiden oder Mähen des korrespondierenden Oberflächenbereiches. Dabei kann das Abtrennen der Fasern und Einbringen in die so freigelegte Schnittfläche (Haupt-Oberfläche) praktisch in einem Arbeitsgang erfolgen.

Aufgrund der "filzartigen Struktur" des Dämmelementes werden nicht alle Zusatzfasern unmittelbar in Löcher, Vertiefungen, Sicken, Hohlräume der entsprechenden Element-Oberfläche eindringen, sodass es sich anbietet, anschließend die Oberfläche zumindest so zu verdichten, dass die Zusatzfasern in gewünschter Weise in den Oberflächenabschnitt des Dämmelementes eindringen können. Eine Möglichkeit dazu bieten bekannte Walzen, zwischen denen die Dämmstoffbahn hindurchgeführt wird.

Es liegt im Rahmen der Erfindung, das Dämmelement darüber hinaus zu bearbeiten beziehungsweise zu behandeln. Dazu gehört bei einer kontinuierlichen Produktion das Schneiden von Bahnen oder Platten beziehungsweise eine gewünschte Formgebung. Das erfindungsgemäße Dämmelement kann auch zur Verwendung in Verbundelementen eingesetzt werden, beispielsweise zur Herstellung von Dämmelementen mit einer Schicht aus einem Mineralfaser-Dämmelement und einer damit verbundenen Schicht aus einem anderen Werkstoff, beispielsweise einer Holzwolle-Leichtbauplatte.

Durch die kompaktierte Oberfläche ergeben sich weitere Vorteile: Die Oberfläche weist insgesamt eine "dichtere Struktur" auf. Sie kann leicht eingefärbt werden. Sie steht für eine anschließende Beschichtung, beispielsweise Putzbeschichtung, zur Verfügung. Aufgrund der erhöhten Dichte lässt sich das Dämmelement leichter verkleben.

Weitere Merkmale der Erfindung sind Gegenstand der Merkmale der Unteransprüche sowie der sonstigen Anmeldungsunterlagen.

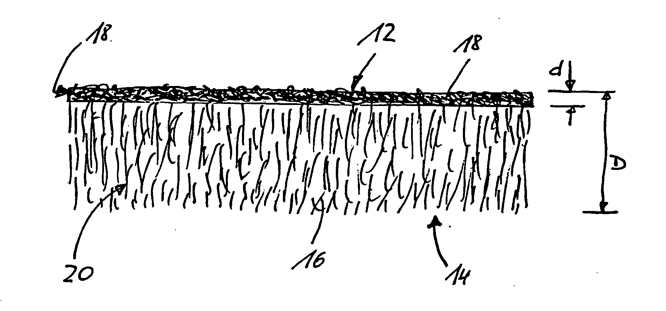

Die Erfindung wird nachstehend anhand eines Ausführungsbeispieles näher beschrieben. Dabei zeigt die einzige Figur - in stark schematisierter Darstellung - einen Schnitt durch ein erfindungsgemäßes Dämmelement auf Basis von Steinwollefasern.

Das Element weist insgesamt eine Dicke D zwischen zwei Haupt-Oberflächen 12, 14 auf. Im Bereich der Haupt-Oberfläche 12 besitzt das Dämmelement eine Dichte von circa 250 kg/m³, wobei dieser Abschnitt eine Gesamtdicke d besitzt. Dieser Bereich trägt in der Figur das Bezugszeichen 18.

Der übrige Teil des Dämmelementes mit der Materialstärke (D - d) besitzt demgegenüber eine relativ lose Mineralfaserstruktur mit einer Dichte von circa 150 kg/m³. Dieser sogenannte Kernbereich ist mit dem Bezugszeichen 20 charakterisiert.

Die verdichtete Schicht im Bereich der Hauptoberfläche 12 wurde gebildet durch Einbringen von zusätzlichen Mineralfasern in Zwischenräume der vorhandenen Mineralfasern während des Transportes des entsprechenden Mineralfaservlieses von einer Sammelkammer zu einem Ofen, wie dies eingangs beschrieben wurde. Die Mineralfasern sind schematisch mit dem Bezugszeichen 16 gekennzeichnet, wobei zu erkennen ist, dass die Haupt-Orientierungsrichtung der Mineralfasern 16 senkrecht zu Hauptoberflächen 12, 14 des Dämmelementes verläuft.

Dazu wurde über ein Fräswerkzeug in Form einer rotierenden Walze die entsprechende Haupt-Oberfläche des Dämmelementes über eine geringe Höhe (1-2 mm) abgefräst. Die dabei abgetrennten Fasern fielen anschließend unmittelbar in die Zwickel zwischen den nicht abgetrennten Mineralfasern im Bereich der Hauptoberfläche 12. Durch eine anschließende Druckwalze erfolgte eine zusätzliche Verdichtung in diesem Abschnitt.

Abschließend wurde die so gebildete Dämmstoffbahn durch einen Ofen transportiert und das Bindemittel bei circa 150° Celsius ausgehärtet. Danach wurde die Dämmstoffbahn in Matten endlicher Länge und Breite geschnitten.

## Patentansprüche

1. Mineralfaser-Dämmelement mit folgenden Merkmalen:
1.1 die Mineralfasern (16) weisen überwiegend eine Orientierung senkrecht zu Haupt-Oberflächen (12,14) des Dämmelements auf,
1.2 im Bereich (18) unterhalb mindestens einer Haupt-Oberfläche (12) weist das Dämmelement eine höhere Dichte an Mineralfasern und einen höheren Anteil an kürzeren Fasern als im Kern (20) des Dämmelements auf.

2. Dämmelement nach Anspruch 1, bei dem in dem Bereich (18) mit höherer Dichte an Mineralfasern ein Anteil an geschnittenen Fasern vorliegt.

3. Dämmelement nach Anspruch 1, bei dem die Rohdichte in dem Bereich (18) mit höherer Dichte an Mineralfasern mindestens 10% über der Rohdichte im Kern (20) des Dämmelements liegt.

4. Dämmelement nach Anspruch 1, bei dem die Rohdichte in dem Bereich (18) mit höherer Dichte an Mineralfasern mindestens 20% über der Rohdichte im Kern (20) des Dämmelements liegt.

5. Dämmelement nach Anspruch 1, bei dem die Rohdichte in dem Bereich (18) mit höherer Dichte an Mineralfasern mindestens 40% über der Rohdichte im Kern (20) des Dämmelements liegt.

6. Dämmelement nach Anspruch 1, bei dem die Rohdichte in dem Bereich (18) mit höherer Dichte an Mineralfasern mindestens 50% über der Rohdichte im Kern (20) des Dämmelements liegt.

7. Dämmelement nach Anspruch 1, bei dem die Rohdichte in dem Bereich (18) mit höherer Dichte an Mineralfasern mindestens 70% über der Rohdichte im Kern (20) des Dämmelements liegt.

8. Dämmelement nach Anspruch 1, bei dem die Rohdichte in dem Bereich (18) mit höherer Dichte an Mineralfasern mindestens 80% über der Rohdichte im Kern (20) des Dämmelements liegt.

9. Dämmelement nach Anspruch 1, bei dem es sich um ein durch Längskomprimierung während des Herstellungsprozesses gefaltetes Produkt handelt.

10. Dämmelement nach Anspruch 1, bei dem es sich um ein Produkt aus Lamellen handelt, die miteinander verbunden sind.

11. Dämmelement nach Anspruch 1, mit einer Rohdichte im Kern zwischen 100 und 500 kg/m².

12. Dämmelement nach Anspruch 1, dessen Bereich (18) mit höherer Dichte an Mineralfasern bis zu 3-10% der Gesamtstärke des Dämmelements, senkrecht zu der entsprechenden Haupt-Oberfläche (12), beträgt.

13. Dämmelement nach Anspruch 1, dessen Bereich (18) mit höherer Dichte an Mineralfasern bis zu 20% der Gesamtstärke des Dämmelements, senkrecht zu der entsprechenden Haupt-Oberfläche (12), beträgt.

14. Dämmelement nach Anspruch 1, dessen Mineralfasern Steinfasern sind.

15. Verfahren zur Herstellung eines Dämmelements nach einem der Ansprüche 1 bis 14, bei dem auf und/oder in mindestens eine Haupt-Oberfläche eines Vlieses aus Mineralfasern, die zumindest partiell mit einem Bindemittel benetzt sind, weitere Fasern gebracht werden und das so behandelte Dämmelement anschließend einen Ofen zur Aushärtung des Bindemittels durchläuft.

16. Verfahren nach Anspruch 15, bei dem die auf mindestens eine Haupt-Oberfläche des Dämmelements gebrachten Fasern zuvor vom Bereich der Haupt-Oberfläche abgetrennt wurden.

17. Verfahren nach Anspruch 15, bei dem das Dämmelement nach dem Aufbringen der Fasern auf der korrespondierenden Haupt-Oberfläche Druck belastet wird.

## Claims

1. Mineral fibre insulating element with the following features:
1.1 the mineral fibres (16) predominantly have an orientation which is perpendicular to main surfaces (12, 14) of the insulating element,
1.2 the insulating element has a higher density of mineral fibres and a higher proportion of shorter fibres in the region (18) below at least one main surface (12) than in the core (20) of the insulating element.

2. Insulating element according to Claim 1, in which there is a proportion of cut fibres in the region (18) with the higher density.

3. Insulating element according to Claim 1, in which the bulk density in the region (18) with the higher density of mineral fibres lies at least 10 % above the bulk density in the core (20) of the insulating element.

4. Insulating element according to Claim 1, in which the bulk density in the region (18) with the higher density of mineral fibres lies at least 20 % above the bulk density in the core (20) of the insulating element.

5. Insulating element according to Claim 1, in which the bulk density in the region (18) with the higher density of mineral fibres lies at least 40 % above the bulk density in the core (20) of the insulating element.

6. Insulating element according to Claim 1, in which the bulk density in the region (18) with the higher density of mineral fibres lies at least 50 % above the bulk density in the core (20) of the insulating element.

7. Insulating element according to Claim 1, in which the bulk density in the region (18) with the higher density of mineral fibres lies at least 70 % above the bulk density in the core (20) of the insulating element.

8. Insulating element according to Claim 1, in which the bulk density in the region (18) with the higher density of mineral fibres lies at least 80 % above the bulk density in the core (20) of the insulating element.

9. Insulating element according to Claim 1, this being a product which is folded by longitudinal compression during the production process.

10. Insulating element according to Claim 1, this being a product consisting of laminae which are joined together.

11. Insulating element according to Claim 1, with a bulk density in the core between 100 and 500 kg/m³.

12. Insulating element according to Claim 1, the region (18) of which with the higher density of mineral fibres constitutes up to 3-10 % of the overall thickness of the insulating element, perpendicularly to the corresponding main surface (12).

13. Insulating element according to Claim 1, the region (18) of which with the higher density of mineral fibres constitutes up to 20 % of the overall thickness of the insulating element, perpendicularly to the corresponding main surface (12).

14. Insulating element according to Claim 1, the mineral fibres of which are rock fibres.

15. Process for producing an insulating element according to any one of Claims 1 to 14, in which additional fibres are applied to and/or in at least one main surface of a nonwoven fabric of mineral fibres which are wetted at least in part with a binder, and the insulating element which is thus treated then passes through an oven for curing the binder.

16. Method according to Claim 15, in which the fibres which are applied to at least one main surface of the insulating element have previously been separated from the region of the main surface.

17. Method according to Claim 15, in which the insulating element is subjected to pressure after the fibres have been applied to the corresponding main surface.

## Revendications

1. Elément d'isolation à base de fibre minérale présentant les caractéristiques suivantes :
1.1 les fibres minérales (16) présentent principalement une orientation perpendiculaire aux surfaces principales (12, 14) de l'élément d'isolation,
1.2 dans la zone (18) située au-dessous d'au moins une surface principale (12), l'élément d'isolation présente une densité plus élevée en fibres minérales et une fraction plus élevée de fibres assez courtes que dans la partie centrale (20) de l'élément d'isolation.

2. Elément d'isolation selon la revendication 1, dans lequel on a une fraction de fibres coupées dans la zone (18) présentant une densité plus élevée de fibres minérales.

3. Elément d'isolation selon la revendication 1, dans lequel la densité brute dans la zone (18) présentant une densité supérieure de fibres minérales se situe au moins à 10 % au-dessus de la densité brute dans la partie centrale (20) de l'élément isolant.

4. Elément d'isolation selon la revendication 1, dans lequel la densité brute dans la zone (18) présentant une densité supérieure de fibres minérales se situe au moins à 20 % au-dessus de la densité brute dans la partie centrale (20) de l'élément isolant.

5. Elément d'isolation selon la revendication 1, dans lequel la densité brute dans la zone (18) présentant une densité supérieure de fibres minérales se situe au moins à 40 % au-dessus de la densité brute dans la partie centrale (20) de l'élément isolant.

6. Elément d'isolation selon la revendication 1, dans lequel la densité brute dans la zone (18) présentant une densité supérieure de fibres minérales se situe au moins à 50 % au-dessus de la densité brute dans la partie centrale (20) de l'élément isolant.

7. Elément d'isolation selon la revendication 1, dans lequel la densité brute dans la zone (18) présentant une densité supérieure de fibres minérales se situe au moins à 70 % au-dessus de la densité brute dans la partie centrale (20) de l'élément isolant.

8. Elément d'isolation selon la revendication 1, dans lequel la densité brute dans la zone (18) présentant une densité supérieure de fibres minérales se situe au moins à 80 % au-dessus de la densité brute dans la partie centrale (20) de l'élément isolant.

9. Elément d'isolation selon la revendication 1, pour lequel il s'agit d'un produit plié par compression longitudinale pendant le processus de fabrication.

10. Elément d'isolation selon la revendication 1, pour lequel il s'agit d'un produit constitué de lamelles qui sont reliées entre elles.

11. Elément d'isolation selon la revendication 1, avec une densité brute dans la partie centrale comprise entre 100 et 500 kg/m².

12. Elément d'isolation selon la revendication 1, dont la zone (18) présentant une densité supérieure de fibres minérales représente jusqu'à 3-10 % de l'épaisseur totale de l'élément d'isolation, perpendiculairement à la surface principale (12) correspondante.

13. Elément d'isolation selon la revendication 1, dont la zone (18) présentant une densité supérieure de fibres minérales représente jusqu'à 20 % de l'épaisseur totale de l'élément d'isolation, perpendiculairement à la surface principale (12) correspondante.

14. Procédé selon la revendication 1, dont les fibres minérales sont des fibres de roche.

15. Procédé pour la fabrication d'un élément d'isolation selon l'une quelconque des revendications 1 à 14, dans lequel d'autres fibres sont amenées sur et/ou dans au moins une surface principale d'un non-tissé en fibres minérales qui sont humectées au moins partiellement avec un liant, et l'élément d'isolation ainsi traité passe ensuite dans un four pour le durcissement du liant.

16. Procédé selon la revendication 15, dans lequel les fibres amenées sur au moins une surface principale de l'élément d'isolation ont été séparées auparavant de la zone de la surface principale.

17. Procédé selon la revendication 15, dans lequel l'élément d'isolation est chargé avec de la pression après l'application des fibres sur la surface principales correspondante.
